# EUROPÄISCHE PATENTSCHRIFT

(11) **EP 2 219 197 B1**
(45) Veröffentlichungstag und Bekanntmachung des Hinweises auf die Patenterteilung: **20.07.2011**
(21) Anmeldenummer: 09152820.8
(22) Anmeldetag: 13.02.2009
(51) Int. Cl.: H01H 9/52, F28D 15/02, H02B 1/56, H02G 5/10

(54) **Kühleinrichtung in einer elektrischen Komponente einer Hochspannungsanlage mit einem Wärmerohr und Verfahren zur Herstellung der Kühleinrichtung**
Cooling device in an electrical component of a high voltage assembly with a heat pipe and method for manufacturing the cooling device
Dispositif de refroidissement dans un composant électrique d'une installation haute tension, doté d'un tuyau de chauffage et procédé de fabrication d'un dispositif de refroidissement

(43) Veröffentlichungstag der Anmeldung: 18.08.2010
(73) Patentinhaber: ABB Technology AG, 8050 Zürich (CH)
(72) Erfinder: Mauroux, Jean-Claude, CH-5502, Hunzenschwil (CH); Bauer, Astrid, CH-8046, Zürich (CH); Widmer, Bruno, CH-8645, Jona (CH); Lakner, Martin, CH-5412, Gebenstorf (CH)

(56) Entgegenhaltungen:
- EP-A- 1 657 731
- EP-A- 1 892 810
- WO-A-2006/053452

## Beschreibung

### TECHNISCHES GEBIET

Die vorliegende Erfindung bezieht sich auf eine Kühleinrichtung in einer elektrischen Komponente einer Hochspannungsanlage nach dem Oberbegriff von Patentanspruch 1 sowie auf ein Verfahren zur Herstellung dieser Kühleinrichtung.

Die vorgenannte elektrische Komponente ist ein mit Betriebsstrom belastetes Teil einer Hochspannungsanlage, insbesondere ein Schaltgerät, wie ein Leistungs- oder Trennschalter oder ein Stromleiter, wie eine Ableitung oder eine Sammelschiene. Die Stromtragfähigkeit einer solchen Komponente ist thermisch begrenzt. Für Nennströme im Bereich von typischerweise 10 bis 50 kA, wie sie etwa in einem als Generatorschalter ausgebildeten Leistungsschalter geführt werden, werden daher aktive Kühleinrichtungen, z.B. Luft-Luft-Wärmetauscher mit Ventilatoren, oder passive, d. h. ohne äussere Hilfsmittel wie etwa Ventilatoren oder Arbeitsmittelpumpen arbeitende, Kühleinrichtungen mit Wärmerohren eingesetzt. Ein Wärmerohr weist einen mit einem fluidem Arbeitsmittel gefüllten und wärmeleitend mit der elektrischen Komponente verbundenen Behälter sowie eine Kühlfläche auf, an der Wärme an einen auf Erdpotential liegenden Kühler abgegeben wird. Während des Betriebs der Anlage wird das Arbeitsmittel durch Aufnahme von Verlustwärme im Behälter verdampft. Der Dampf gelangt durch natürliche Konvektion vom Behälter an die Kühlfläche, an der der Dampf unter Abgabe der aufgenommenen Wärme kondensiert. Das hierbei gebildete flüssige Arbeitsmittel zirkuliert danach wieder zurück in den Behälter.

Die durch den Betriebsstrom der Anlage gebildete Verlustwärme ist häufig durch eine Kapselung hindurch an die Umgebungsluft abzuführen. Dies bedeutet, dass zwischen einem auf Hochspannungspotential befindlichen und als Verdampfungsgefäss dienenden Behälter des Wärmerohrs und dem auf Erdpotential liegenden Kühler eine elektrische Isolierstrecke benötigt wird, die entsprechend der geforderten Hochspannung ausgelegt sein muss. Daher weist das Wärmerohr auch ein Isolierrohr auf, welches mit der durch die Potentialdifferenz zwischen Behälter und Kühler bestimmten Hochspannung belastet werden kann, und durch welches das Arbeitsmittel vom Verdampferbehälter zur Kühlfläche und umgekehrt strömen kann. Unter Hochspannung ist hierbei grundsätzlich eine Betriebsspannung grösser 1 kV zu verstehen ist. Der bevorzugte Spannungsbereich liegt jedoch häufig unterhalb 100 kV und betrifft vor allem Generatorableitungen mit hochstromführenden Komponenten, wie insbesondere ein- oder mehrphasig gekapselten Schaltgeräten mit Nennspannungen von typischerweise 10 bis 50 kV.

### STAND DER TECHNIK

Eine Kühleinrichtung in einer elektrischen Komponente einer Hochspannungsanlage mit einem Wärmerohr ist in WO 2006/053452 A1 beschrieben. Das Wärmerohr leitet die Verlustwärme einer elektrischen Komponente einer Generatorableitung, etwa eines Schalters, an die umgebende Aussenluft. Es weist in koaxialer Anordnung ein mechanisch tragendes Isolierrohr sowie zwei hohle Metallarmaturen auf, die vakuumfest mit den beiden Enden des Isolierrohrs verklebt sind. An der einen der beiden Metallarmaturen ist ein auf dem Potential eines Hochspannungsleiters der elektrischen Komponente gehaltener Verdampferbehälter thermisch leitend befestigt. Die andere Armatur ist mit einem auf dem Potential einer geerdeten Kapselung gehaltenen Kühler thermisch leitend verbunden. Das Isolierrohr bildet eine Isolierstrecke des Wärmerohrs.

Während des Betriebs der Hochspannungsanlage überträgt das Wärmerohr durch Stromverluste in der Generatorableitung gebildete Wärme auf den Kühler. Hierbei dient das im Inneren des Wärmerohrs befindliche Arbeitsmittel, wie insbesondere Aceton oder ein Hydro-Fluor-Äther, der Wärmeübertragung. Infolge von Stromverlusten in der Anlage gebildete Verlustwärme verdampft das Arbeitsmittel im Behälter. Der Dampf zirkuliert vom Behälter durch das Isolierrohr hindurch zu einer Kühlfläche, an der er kondensiert. Die beim Kondensieren an der als Wärmesenke wirkenden Kühlfläche entstehende Wärme wird vom Kühler aufgenommen und an die Aussenluft abgegeben. Die beim Kondensieren gebildete Flüssigkeit wird über das Isolierrohr wieder zum Behälter zurückgeführt.

### DARSTELLUNG DER ERFINDUNG

Der Erfindung, wie sie in den Patentansprüchen angegeben ist, liegt die Aufgabe zugrunde, eine Kühleinrichtung in einer Komponente einer Hochspannungsanlage zu schaffen, welche sich durch einfachen Aufbau sowie durch einen hohen Wirkungsgrad und eine grosse Langzeitstabilität auszeichnet, und zugleich ein Verfahren anzugeben, mit dem diese Kühleinrichtung in kostengünstiger Weise gefertigt werden kann.

Bei der Kühleinrichtung nach der Erfindung enthält ein in einem Wärmerohr einsetzter Verdampferbehälter mindestens zwei stoffschlüssig miteinander verbundene Behälterteile, von denen das erste einen im Inneren des Behälters angeordnete Oberflächenabschnitt der elektrischen Komponente aufweist und das zweite eine hohle Anschlussarmatur für ein Isolierrohr trägt.

Da sich der Oberflächenabschnitt nun im Behälter befindet, kontaktiert ein fluides Arbeitsmittel des Wärmerohrs diese Oberfläche unmittelbar. Bei Betrieb der Anlage in der elektrischen Komponente entstehende Verlustwärme geht nun innerhalb des Behälters vom Oberflächenabschnitt der elektrischen Komponente auf das Arbeitsmittel über. Es entfällt nun ein vergleichsweise grosser, von Unebenheiten, Oxidschichten oder einer ungleichen Kontaktdruckverteilung abhängiger thermischer Kontaktwiderstand zwischen der elektrischen Komponente und dem Behälter. Da nurmehr ein vergleichsweise geringer thermischer Kontaktwiderstand zwischen der Behälterinnenfläche und dem Arbeitsmittel verbleibt, reduziert sich der Wärmewiderstand des Wärmerohrs erheblich und wird dessen Wirkungsgrad dementsprechend erhöht. Durch den reduzierten Wärmewiderstand des Wärmerohrs kann nun auch bei erhöhter Strombelastung resp. damit verbundener erhöhter Verlustwärme die Temperatur der Anlage bzw. der elektrischen Komponente unterhalb einer Grenztemperatur gehalten werden.

Bei einem Verfahren zur Herstellung einer solchen Kühleinrichtung werden mindestens zwei Teile des Behälters vorgefertigt, von denen das erste einen Oberflächenabschnitt der elektrische Komponente enthält, wird in das erste der beiden Behälterteile eine den Oberflächenabschnitt ringförmig umfassende Nut eingeformt, wird in das zweite Behälterteil ein ringförmig geschlossener Rand eingeformt, wird in die Nut härtbarer Klebstoff eingefüllt, werden durch Einbringen des Randes in die Nut die beiden Behälterteile miteinander verfugt und wird hierbei der härtbare Klebstoff in eine beim Verfugen gebildete Fuge gepresst, und wird der so vorgefertigte Behälter einer Wärmehandlung unterzogen, bei der eine gehärteten Klebstoff enthaltende Klebverbindung gebildet wird.

Weitere Merkmale und weitere vorteilhafte Wirkungen der Erfindung ergeben sich aus den nachfolgend beschriebenen Ausführungsbeispielen.

### KURZE BESCHREIBUNG DER FIGUREN

Anhand von Zeichnungen werden diese Ausführungsbeispiele der Erfindung näher erläutert. Hierbei zeigen:
Fig. 1 eine Draufsicht auf einen schematisch dargestellten Abschnitt einer mit Kühleinrichtungen gekühlten, gekapselt ausgeführten Hochspannungsanlage, bei der ein nach oben weisendes Teil der Kapselung entfernt wurde,
Figuren 2 bis 8 jeweils eine Ansicht von links auf einen längs II - II geführten Schnitt durch einen als Verdampfer benutzten Behälter, der jeweils Teil einer von sieben vergrössert und lediglich schematisch dargestellten Ausführungsformen einer der Kühleinrichtungen nach Fig. 1 ist,
Fig. 9 eine schräg von links oben geführte Sicht auf den Schnitt durch den nun detaillierter dargestellten Behälter nach Fig.8,
Fig. 10 in perspektivischer Darstellung der Behälter nach Fig. 9 zu Beginn seiner Fertigung, und
Fig. 11 in perspektivischer Darstellung der Behälter nach Fig. 9 in einem weiter fortgeschrittenen Stadium seiner Fertigung.

### WEG ZUR AUSFÜHRUNG DER ERFINDUNG

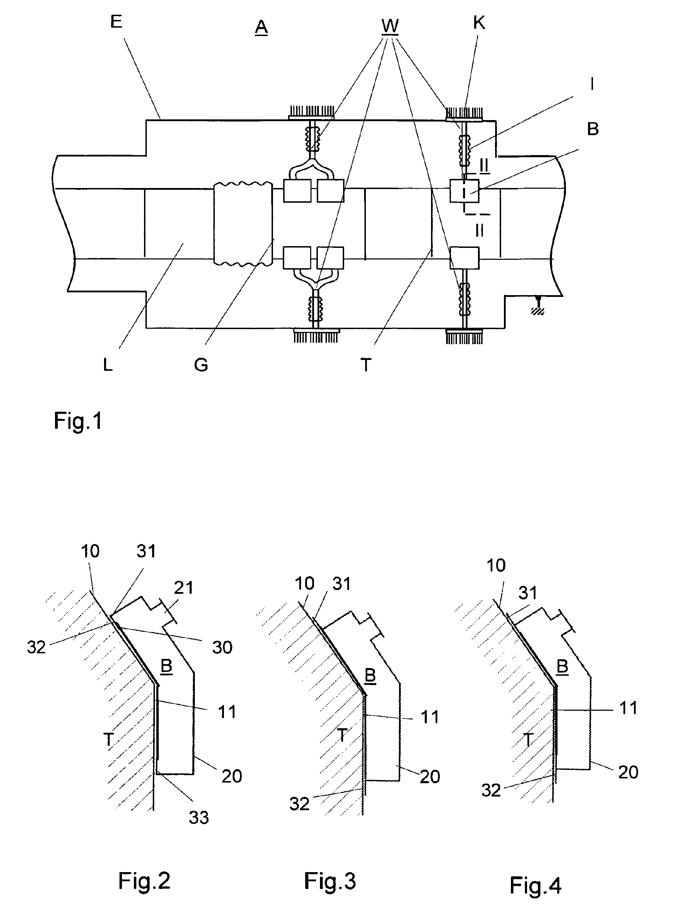

In allen Figuren beziehen sich gleiche Bezugszeichen auf gleich wirkende Teile. Der in Fig.1 dargestellte Abschnitt einer Hochspannungsanlage A ist Teil einer Phase einer mehrphasigen Generatorableitung und enthält eine geerdete Metallkapselung E, einen in der Kapselung gehaltenen Stromleiter L sowie Wärmerohre W. Die Kapselung E dient der Führung eines bei Betrieb der Anlage auftretenden Rückstroms, wohingegen der Stromleiter L der Führung eines in einem Generator erzeugten Stroms von typischerweise 10 bis 50 kA bei Spannungen von typischerweise 10 bis 50 kV dient. Ersichtlich stehen Abschnitte des Stromleiters L, wie als Generatorschalter G bzw. als Trennschalter T ausgebildete elektrische Komponenten der Generatorableitung, in wärmeleitendem Kontakt mit je zwei Wärmerohren W.

Die Wärmerohre W weisen jeweils ein abgeschlossenes, vakuumfestes Volumen auf, in dem ein im allgemeinen unter der Wirkung der Schwerkraft zirkulierbares Arbeitsmittel angeordnet ist. Jedes der Wärmerohre W ist daher gegenüber der Horizontalen geneigt angeordnet. Am unteren Ende des Wärmerohrs W befindet sich ein Behälter B eines Verdampfers und am oberen Ende eine Kühlfläche, die in thermisch leitender Weise mit einem Kühler K verbunden ist. Der Behälter B ist aus Metall gefertigt und ist thermisch an den Stromleiter L angekoppelt. Auch der Kühler K ist aus Metall gefertigt. Dieser Kühler ist auf der Kapselung E befestigt, kann aber auch neben der Kapselung E montiert sein. Grundsätzlich kann der Kühler ein separat ausgeführtes Objekt sein, welches ausserhalb der Kapselung E angebracht ist und Wärme nach aussen abgibt. Er kann auch thermisch an der Kapselung E angekoppelt sein. Im allgemeinen weist er der Heizwirkung des Stromleiters L entzogene Kühlrippen auf. Wie aus Fig.1 ersichtlich ist, kann zum Erreichen einer grösseren Verdampferleistung das Wärmerohr W auch zwei (oder gegebenenfalls auch mehr als zwei) Behälter aufweisen. Im Inneren der Wärmerohre W können auch vom Behälter B zur Kühlfläche resp. zum Kühler K erstreckte Kapillaren angeordnet sein. Das unter der Wirkung des Kühlers K verflüssigte Arbeitsmittel wird dann durch Kapillarkräfte von der Kühlfläche zum Behälter B zurückgeführt. Ein mit Kapillaren versehenes Wärmerohr kann unabhängig von seiner Position, also nach oben, nach unten, horizontal oder schräg nach oben oder nach unten ausgerichtet, in die Anlage A eingebaut sein.

Zur Überbrückung der Potentialdifferenz zwischen Behälter B bzw. Stromleiter L und Kühlfläche bzw. Kühler K bzw. Kapselung E ist hierbei ein als Isolierstrecke wirkendes Isolierrohr I vorgesehen. Das Isolierrohr ist während des Betriebs der Anlage A nicht nur hohen elektrischen Belastungen ausgesetzt, sondern zugleich auch thermischen und chemischen Belastungen, welche durch das in seinem Inneren als Flüssigkeit und als Dampf zirkulierende Arbeitsmittel hervorgerufen werden.

Während des Betriebs erwärmt der im Stromleiter L geführte und im Generator erzeugte Nennstrom die Anlage A beträchtlich. Da besonders gefährdete Teile der Anlage, beispielsweise den Stromleiter L tragende Isolatoren, eine Grenztemperatur von typischerweise 105°C nicht überschreiten dürfen, kann nur ein bestimmter Nennstrom, welcher ohne Kühlung beispielsweise 13 kA betragen darf, geführt werden. Im Behälter B wird das Arbeitsmittel verdampft und wird dabei dem Stromleiter L Wärme entzogen. Mit einem geeigneten Arbeitsmittel, etwa Aceton oder einem Hydro-Fluor-Äther, kann so trotz eines gegenüber einer ungekühlten Anlage erheblich gesteigerten Nennstroms der Stromleiter L unterhalb der Grenztemperatur gehalten werden. Das verdampfte Arbeitsmittel verflüssigt sich an der nicht bezeichneten Kühlfläche, an der die hierbei freigesetzte Kondensationswärme in den Kühler K gelangt und von dort an die Aussenluft abgegeben wird. Das verflüssigte Arbeitsmittel fliesst infolge der Schwerkraft über das schräg gestellte Wärmerohr W wieder in den Behälter B zurück.

Wie aus den Figuren 2 bis 8 ersichtlich ist, weist der Behälter B zwei stoffschlüssig miteinander verbundene Behälterteile 10, 20 auf. Das erste 10 der beiden Behälterteile wird von einem mit Stromwärme belasteten Abschnitt der elektrischen Komponente T gebildet und weist einen im Inneren des Behälters B angeordneten Oberflächenabschnitt 11 auf. Das zweite Behälterteil 20 ist durch eine Klebverbindung 30 arbeitsmitteldicht mit dem Behälterteil 10 verbunden und trägt eine hohle Anschlussarmatur 21 des Isolierrohrs I. Anstelle einer Klebverbindung 30 kann gegebenenfalls auch eine andere arbeitsmitteldichte, stoffschlüssige Verbindung, etwa eine Löt- oder Schweissverbindung, vorgesehen sein. Zur Fertigung der Klebverbindung wird ein flüssiger Klebstoff, beispielsweise ein Zweikomponentenkleber auf der Basis eines Epoxids, verwendet.

Da sich der Oberflächenabschnitt 11 im Behälter B befindet, kontaktiert das Arbeitsmittel diese Oberfläche unmittelbar. Bei Betrieb der Anlage A im Stromleiter L gebildete Wärme geht nun innerhalb des Behälters B an der Oberfläche 11 vom Stromleiter L resp. der als Trenner T ausgebildeten elektrischen Komponente auf das Arbeitsmittel über. Da nun ein im allgemeinen vergleichsweise grosser, von Unebenheiten, Oxidschichten oder einer ungleichen Kontaktdruckverteilung abhängiger thermischer Kontaktwiderstand zwischen dem Stromleiter L und dem Behälter B entfällt und da lediglich ein vergleichsweise geringer thermischer Kontaktwiderstand zwischen einer Fläche des Behälters B, hier dem Oberflächenabschnitt 11, und dem Arbeitsmittel verbleibt, reduziert sich der Wärmewiderstand des Wärmerohrs W erheblich und wird dessen Wirkungsgrad dementsprechend erhöht. Durch den reduzierten Wärmewiderstand des Wärmerohrs W kann nun auch bei erhöhter Strombelastung resp. damit verbundener erhöhter Verlustwärme die Temperatur der Anlage A bzw. der Komponente T unterhalb der Grenztemperatur gehalten werden. Da der Behälter B Teil eines Verdampfers ist, kann der Wärmewiderstand zusätzlich dadurch reduziert werden, dass der Oberflächenabschnitt 11 mit einem den Siedevorgang des Arbeitsmittels erleichternden Material, beispielsweise einem porösem Werkstoff, beschichtet ist.

Bei den in den Figuren 2 bis 7 dargestellten Behältern B weist die Klebverbindungen 30 jeweils eine in das Behälterteil 10 eingeformte, den Oberflächenabschnitt 11 ringförmig umfassende Fügefläche 31 und eine ins Behälterteil 20 eingeformte, die Fügefläche 31 überlappende Fügefläche 32 auf sowie eine zwischen den beiden Fügefläche angeordnete und mit gehärtetem Klebstoff 33 ausgefüllte Klebfuge. Aus Gründen der Übersichtlichkeit sind die Fügeflächen 31 und 32 nur in den Figuren 2 bis 4 und ist der gehärtete Klebstoff 33 nur in der Fig. 2 bezeichnet.

Solche Behälter lassen sich besonders einfach fertigen. In die Oberfläche des von der elektrischen Komponente T gebildeten Behälterteils 10 wird etwa durch Glätten, beispielsweise durch Anschleifen und Polieren, die Fügefläche 31 eingeformt. Diese Fügefläche ist so angeordnet, dass sie den Oberflächenabschnitt 11 ringförmig umfasst. In das Behälterteil 20 wird in entsprechender Weise die Fügefläche 32 eingeformt. Die beiden Behälterteile 10, 20 werden sodann miteinander verfugt. Ein beim Verfugen zwischen den beiden Fügeflächen 31 und 32 gebildete Spalt wird mit einem härtbaren Klebstoff gefüllt, der nach dem Aushärten bei erhöhter Temperatur eine stoffschlüssige und arbeitsmitteldichte Verbindung 31 der beiden Behälterteile 10, 20 durch den ausgehärteten Klebstoff 33 bewirkt.

Ersichtlich können sich die beiden Fügeflächen 31, 32 innerhalb (Fig. 2) oder ausserhalb (Fig. 3) des Behälters überlappen. Überlappen sich die beiden Fügeflächen entsprechend Fig. 4 innerhalb und ausserhalb des Behälters B, so weist die Klebverbindung 30 einen längeren Diffusionsweg im Klebstoff auf als bei den Ausführungsformen nach den Figuren 2 und 3.

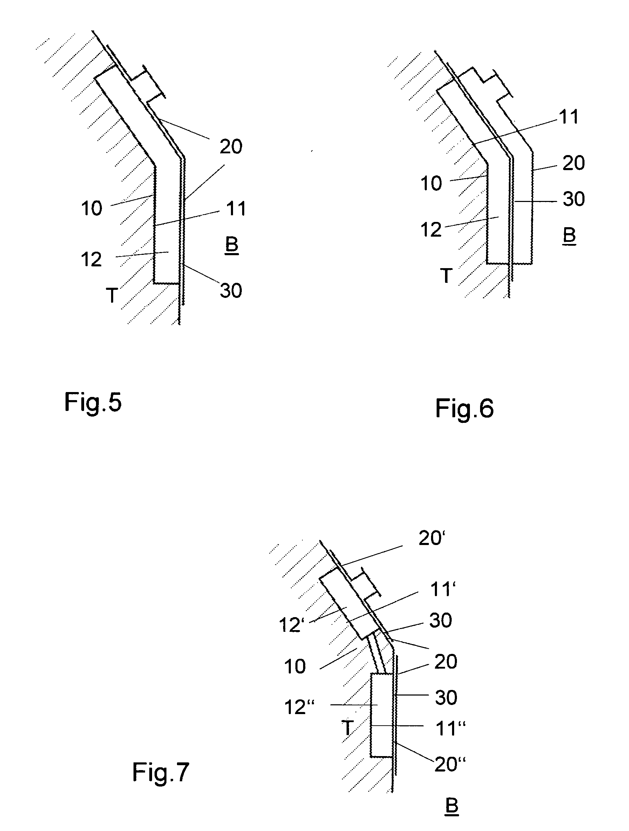

Bei den aus den Figuren 5 bis 7 ersichtlichen Ausführungsformen des Behälters B, ist in die elektrische Komponente T auch eine den Oberflächenabschnitt 11 enthaltende Vertiefung 12 eingeformt. Der Oberflächenabschnitt 11 ist daher grösser als bei den Ausführungsformen nach den Figuren 2 bis 4. Eine Kühleinrichtung mit einem solchen Behälter weist dementsprechend einen besonders geringen Wärmewiderstand auf.

Bei der Ausführungsform nach Fig. 5 weist das Behälterteil 20 zwei ebene, gegeneinander abgewinkelt angeordnete Flächen auf, die eine vergleichsweise einfache Fertigung des Behälters B ermöglichen.

Im Unterschied zur Ausführungsform nach Fig.5 ist bei der Ausführungsform nach Fig. 6 das Behälterteil 20 als nach aussen gewölbte Halbschale ausgebildet. Eine solche Ausführungsform des Behälters B weist ein relativ grosses Volumen zur Aufnahme des Arbeitsmittels auf.

Bei der Ausführungsform nach Fig. 7 sind in das Behälterteil 10 zwei Vertiefungen 12', 12" eingeformt, die jeweils einen von zwei Abschnitten 11', 11" der Oberfläche der elektrischen Komponente T aufnehmen. Das Behälterteil 20 enthält zwei Platten 20', 20", die unter Bildung zweier miteinander kommunizierender Teilvolumina jeweils eine der beiden Vertiefungen 12', 12" nach aussen begrenzen. Da bei diesem Behälter B die Klebverbindung 30 lediglich ebene Fügeflächen aufweist, kann ein solcher Behälter besonders einfach gefertigt werden.

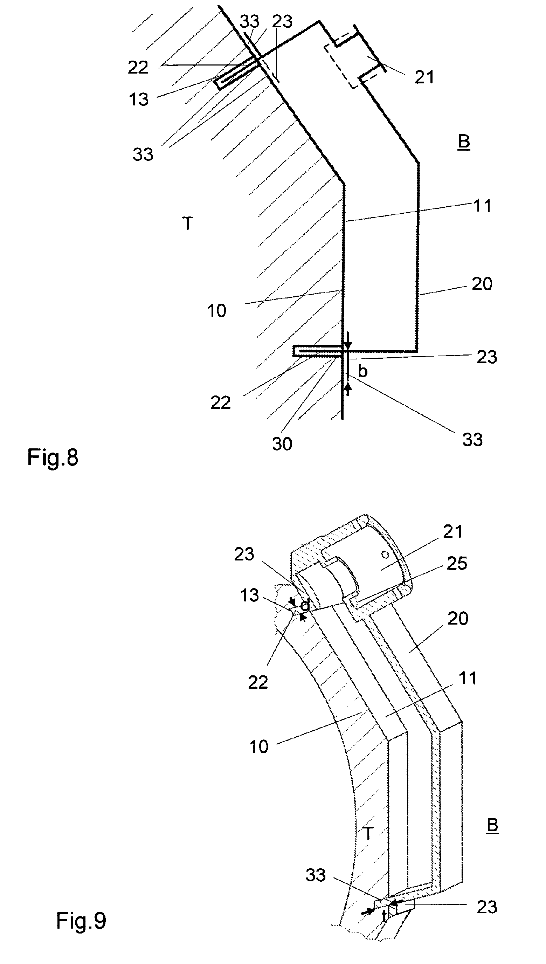

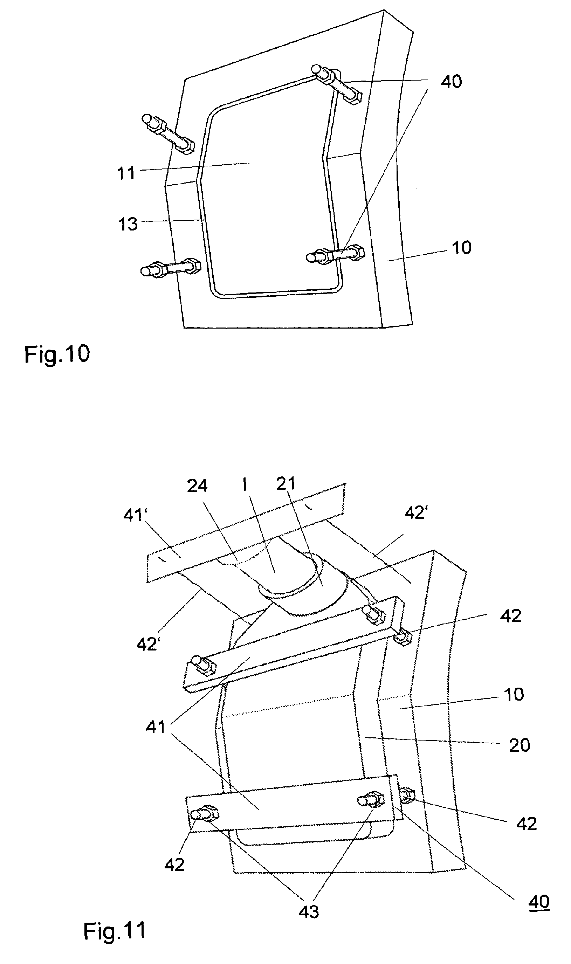

Bei der Ausführungsform des Behälters nach den Figuren 8 und 9 weist die Klebverbindung eine Verfugung der beiden Behälterteile in Form einer Nutverbindung auf. In das Behälterteil 10 ist eine den Oberflächenabschnitt 11 ringförmig umfassende Nut 13 der Nutverbindung eingeformt (Fig.10). Das Behälterteil 20 weist einen in die Nut 13 eingefügten Steg 22 auf. Eine zwischen dem Grund der Nut 13 sowie zwei an den Nutgrund sich anschliessenden Nutflanken und dem Steg 22 angeordnete Fuge ist mit gehärtetem Klebstoff 33 ausgefüllt. Durch die Kombination einer Nut- mit einer Klebverbindung wird zum einen eine hohe mechanische Festigkeit des Behälters und zum anderen ein langer Diffusionsweg im gehärteten Klebstoff 33 erreicht. Wie aus Fig. 9 ersichtlich ist, ist der Diffusionsweg nun durch die doppelte Tiefe t der Nut 13 und die Dicke d des Stegs 22 bestimmt. Eine zusätzliche Verlängerung des Diffusionswegs wird dadurch erreicht, dass das Behälterteil 20 mindestens eine in die Klebverbindung 30 integrierte, ausserhalb der Nut 13 angeordnete Umrandung 23 enthält. Die Umrandung 23 ist ringförmig ausgebildet und ist mit Hilfe des ausgehärteten Klebstoffs 33 mit der Oberfläche des Behälterteils 10 starr verbunden. Der Diffusionsweg ist nun um die aus Fig. 8 ersichtliche Breite b der Umrandung 23 erhöht. Aus Fig. 8 ist auch ersichtlich, dass die Umrandung 23 inner- oder ausserhalb des Behälters B angeordnet sein kann. Sind zwei Umrandungen vorgesehen, von denen die eine (gestrichelt dargestellt) im Behälter B und die andere ausserhalb des Behälters angeordnet ist, so wird ein besonders langer Diffusionsweg und dementsprechend eine Vakuumfestigkeit des Behälters B über einen langen Zeitraum erreicht.

Bei der Fertigung des Behälters B gemäss den Figuren 8 und 9 wird in das Behälterteil 10 die Nut 13 und in das Behälterteil 20 der Steg 22 eingeformt. Das

Einformen wird typischerweise durch spanabhebendes Bearbeiten erreicht. Wie Fig. 10 entnommen werden kann, umgibt die Nut 13 den Oberflächenabschnitt 11 der elektrischen Komponente T ringförmig. In die Nut 13 wird flüssiger Klebstoff eingefüllt und der Steg 22 des nach Art einer Halbschale nach aussen gewölbt ausgebildeten Behälterteils 20 in die Nut 13 eingebracht. Das Anlegen von Fügekraft ermöglicht das Eindringen des Stegs 22 in die Nut 13 und gleichzeitig den Aufbau von Druck im Klebstoff. Durch die Fügekraft werden daher die beiden Behälterteile 10, 20 miteinander verfugt und wird zugleich der Klebstoff durch den in die Nut 13 eindringenden Steg 22 verdrängt und in die beim Verfugen gebildete Klebfuge gepresst. Diese Klebfuge erstreckt sich gegebenenfalls, d. h. bei Verwendung einer Umrandung 23, in einen an die Nut 13 sich anschliessenden, ringförmigen Spalt, der zwischen Oberfläche des Behälterteils 10 resp. der elektrischen Komponente T und der Umrandung 23 angeordnet ist.

Sobald der Steg 22 oder die gegebenenfalls vorgesehene Umrandung 23 an die elektrische Komponente T anschlägt, ist der Fuge- und Verdrängungsprozess beendet und ist dann die Klebfuge vollständig mit Klebstoff gefüllt. Nach einer das Aushärten des Klebstoffs beschleunigenden Wärmebehandlung bei typischerweise 60 bis 180°C wird ein Behälter B erreicht, der sich durch gute mechanische Eigenschaften auszeichnet. Fertigungstechnisch zu bevorzugen ist ein Klebstoff, der im oberen Teil des angegebenen Temperaturintervalls gehärtet wird, da dann beim Härten zugleich eine zum Schutz der Klebstelle 30 resp. des Behälters B resp. der Komponente T benötigte Lackierung eingebrannt werden kann.

Um das Fügen und Verkleben der beiden Behälterteile 10, 20 zu erleichtern, wird bei der Fertigung des Behälters eine an der elektrischen Komponente T resp. am Behälterteil 10 befestigte Montagehilfe 40 verwendet. Die aus Fig. 11 ersichtliche Montagehilfe weist vier starr am Behälterteil 10 befestigte und senkrecht zur Oberfläche des Behälterteils 10 ausgerichtete Gewindestangen 42 sowie zwei Druckbalken 41 auf. Die Enden der Druckbalken 41 enthalten jeweils eine Bohrung, durch welche jeweils eine der Gewindestangen 42 geführt ist. Nach Einbringen des Stegs 22 in die Nut 13 werden die beiden Druckbalken 41 und je zwei der Gewindestangen 42 zusammengefügt und mit Muttern 43 verschraubt. Beim Verschrauben bildet sich eine Fügekraft. Die Druckbalken 41 sorgen dafür, dass das Behälterteil 20 beim Fügen präzise geführt wird und hierbei zugleich mit einer definierten und gleichmässig über den aus den Figuren 8 und 9 ersichtlichen Steg 22 verteilten Fügekraft beaufschlagt ist. Die Montagehilfe 40 wird nach der Wärmebehandlung entfernt.

Wie aus den Figuren 8, 9 und 11 ersichtlich ist, trägt das Behälterteil 20 eine hohle Anschlussarmatur 21. Diese wird bei der Fertigung des Wärmerohrs arbeitsmitteldicht und stoffschlüssig, insbesondere durch Verkleben, mit dem Isolierrohr I verbunden. Die Anschlussarmatur 21 ist ersichtlich in das Behälterteil 20 eingeformt. Wie in Fig. 8 gestrichelt angegeben ist, kann die Anschlussarmatur 21 aber auch lösbar, etwa durch vakuumfestes Verschrauben, mit dem Behälterteil 20 verbunden sein. Bei einem Defekt des Isolierrohrs I, kann dieses nach Öffnen der Schraubverbindung dann leicht ersetzt werden.

Wie in Fig. 11 schematisch angedeutet ist, weist die Montagehilfe 40 gegebenenfalls auch einen in zwei Gewindestangen 42' geführten Druckbalken 41' auf, der auf eine zweite Anschlussarmatur 24 des Isolierrohrs I wirkt. Bei der Fertigung des Wärmerohrs W wird in eine aus Fig.8 ersichtliche Nut 25 der Anschlussarmatur 21 und in eine entsprechend ausgebildete Nut der Anschlussarmatur 24 flüssiger Klebstoff eingebracht und wird das Isolierrohr I mit seinem unteren Ende in die Nut 25 und mit seinem oberen Ende in die entsprechende Nut der Anschlussarmatur 24 geführt. Danach werden der Druckbalken 41' und die beiden Gewindestangen 42' zusammengefügt und mit nicht dargestellten Muttern verschraubt. Beim Verschrauben bildet sich eine Fügekraft, die das Eindringen der Rohrenden in die Nuten der beiden Armaturen unter gleichzeitigem Aufbau von Druck im Klebstoff ermöglicht. Es werden so das Isolierrohr I und die beiden Anschlussarmaturen 21, 24 miteinander verfugt und Klebstoff in die beim Fügen zwischen dem Isolierstoffrohr I und den Armaturen 21, 24 gebildete Fugen gepresst. Der Druckbalken 41' sorgt entsprechend dem Druckbalken 41 dafür, dass das Isolierrohr I und die Anschlussarmatur 24 beim Fügen präzise geführt werden und das Isolierrohr I so mit einer definierten und gleichmässig über seinen gesamten Umfang verteilten Fügekraft beaufschlagt ist.

Sobald die Enden des Isolierrohrs I an den Anschlussarmaturen 21, 24 anschlagen, ist der Fuge- und Verdrängungsprozess beendet und sind dann die Fugen vollständig mit Klebstoff gefüllt. Durch die nachfolgende zuvor bei der Fertigung des Behälters B bereits beschriebene Wärmebehandlung wird ein Wärmerohr W erreicht, das sich durch eine hohe mechanische Zugscherfestigkeit von typischerweise 20 [N/mm²] und eine gute Vakuumdichtigkeit mit einer Leckrate von weniger als 10⁻⁹ [mbar I/s] auszeichnet.

### BEZUGSZEICHENLISTE

- A: Hochspannungsanlage
- B: Behälter
- I: Isolierrohr
- E: Metallkapselung
- G, T: elektrische Komponenten der Hochspannungsanlage
- K: Kühler
- L: Stromleiter
- W: Wärmerohr
- 10: Behälterteil
- 11: Oberflächenabschnitt
- 12, 12', 12": Vertiefungen
- 13: Nut
- 20: Behälterteil
- 20', 20": Platten
- 21: Anschlussarmatur
- 22: Steg
- 23: Umrandung
- 24: Anschlussarmatur
- 25: Nut
- 30: Klebverbindung
- 31, 32: Fügeflächen
- 33: gehärteter Klebstoff
- 40: Montagehilfe
- 41, 41': Gewindestangen
- 42, 42': Druckbalken
- 43: Druckmuttern
- b: Breite von Wandansatz 23
- d: Dicke von Rand 22
- t: Tiefe von Nut 13

## Patentansprüche

1. Kühleinrichtung in einer elektrischen Komponente (G, T) einer Hochspannungsanlage (A) mit einem Wärmerohr (W), welches bei Betrieb der Anlage in der elektrischen Komponente gebildete Verlustwärme durch Verdampfen eines Arbeitsmittels und nachfolgendes Kondensieren des verdampften Arbeitsmittels auf einen Kühler (K) überträgt und einen mit Hochspannungspotential beaufschlagten und der Verlustwärme ausgesetzten Behälter (B) zur Aufnahme des Arbeitsmittels sowie ein mit dem Behälter verbundenes Isolierrohr (I) aufweist, **dadurch gekennzeichnet, dass** der Behälter (B) mindestens zwei stoffschlüssig miteinander verbundene Behälterteile (10, 20) enthält, von denen das erste (10) einen im Inneren des Behälters (B) angeordneten ersten Oberflächenabschnitt (11, 11') der elektrischen Komponente (G, T) aufweist und das zweite (20) eine hohle Anschlussarmatur (21) für das Isolierrohr (I) trägt.

2. Kühleinrichtung nach Anspruch 1, **dadurch gekennzeichnet, dass** die stoffschlüssige Verbindung als Klebverbindung (30) ausgeführt ist.

3. Kühleinrichtung nach Anspruch 2, **dadurch gekennzeichnet, dass** die Klebverbindung (30) eine Verfugung der beiden Behälterteile (10, 20) in Form einer Nutverbindung aufweist.

4. Kühleinrichtung nach Anspruch 3, **dadurch gekennzeichnet, dass** in das erste Behälterteil (10) eine den ersten Oberflächenabschnitt (11, 11') ringförmig umfassende Nut (13) der Nutverbindung eingeformt ist, dass das zweite Behälterteil (20) einen in die Nut (13) eingefügten Steg (22) aufweist, und dass eine zwischen dem Grund der Nut (13) sowie zwei an den Nutgrund sich anschliessenden Nutflanken und dem Steg (22) des zweiten Behälterteils (20) angeordnete Fuge mit gehärtetem Klebstoff (33) ausgefüllt ist.

5. Kühleinrichtung nach Anspruch 4, **dadurch gekennzeichnet, dass** das zweite Behälterteil (20) mindestens eine in die Klebverbindung integrierte, ausserhalb der Nut (13) angeordnete Umrandung (23) enthält.

6. Kühleinrichtung nach Anspruch 2, **dadurch gekennzeichnet, dass** die Klebverbindung eine in die Oberfläche des ersten Behälterteil (10) eingeformte, den ersten Oberflächenabschnitt (11, 11') ringförmig umfassende erste Fügefläche (31) und eine in die Oberfläche des zweiten Behälterteils (20) eingeformte, die erste Fügefläche (31) überlappende zweite Fügefläche (32) aufweist sowie eine zwischen der ersten und der zweiten Fügefläche angeordnete und mit gehärtetem Klebstoff (33) ausgefüllte Fuge.

7. Kühleinrichtung nach Anspruch 6, **dadurch gekennzeichnet, dass** in das erste Behälterteil (10) eine den ersten Oberflächenabschnitt (11, 11') enthaltende Vertiefung (12) eingeformt ist.

8. Kühleinrichtung nach Anspruch 7, **dadurch gekennzeichnet, dass** das zweite Behälterteil (20) flach oder gewinkelt ausgebildet ist.

9. Kühleinrichtung nach einem der Ansprüche 6 bis 8, **dadurch gekennzeichnet, dass** das zweite Behälterteil (20) gewölbt ausgebildet ist und einen die zweite Fügefläche (32) tragenden, flach oder gewinkelt ausgebildeten Aussenrand aufweist.

10. Kühleinrichtung nach Anspruch 6, **dadurch gekennzeichnet, dass** in das erste Behälterteil (10) zwei miteinander kommunizierende Vertiefungen (12', 12") eingeformt sind, dass die erste Vertiefung (12') den ersten Oberflächenabschnitt (11') und die zweite Vertiefung (12") einen zweiten Oberflächenabschnitt (11 ") der elektrischen Komponente (G, T) aufweist, und dass das zweite Behälterteil (20) zwei Platten (20', 20") enthält, die unter Bildung zweier miteinander kommunizierender Teilvolumina des Behälters (B) jeweils eine der beiden Vertiefungen nach aussen begrenzen.

11. Kühleinrichtung nach einem der Ansprüche 1 bis 10, **dadurch gekennzeichnet, dass** der erste Oberflächenabschnitt (11) mit einem den Siedevorgang des Arbeitsmittels erleichternden Material beschichtet ist.

12. Kühleinrichtung nach einem der Ansprüche 1 bis 11, **dadurch gekennzeichnet, dass** die hohle Anschlussarmatur (21) lösbar mit dem zweiten Behälterteil (20) verbunden ist.

13. Verfahren zur Herstellung einer Kühleinrichtung in einer elektrischen Komponente (G, T) einer Hochspannungsanlage (A) mit einem Wärmerohr (W), welches bei Betrieb der Anlage in der elektrischen Komponente gebildete Verlustwärme durch Verdampfen eines Arbeitsmittels und nachfolgendes Kondensieren des verdampften Arbeitsmittels auf einen Kühler (K) überträgt und einen mit Hochspannungspotential beaufschlagten und der Verlustwärme ausgesetzten Behälter (B) zur Aufnahme des Arbeitsmittels sowie ein mit dem Behälter verbundenes Isolierrohr (I) aufweist, **dadurch gekennzeichnet, dass** mindestens zwei Teile (10, 20) des Behälter (B) vorgefertigt werden, von denen das erste (10) einen Oberflächenabschnitt (11) der elektrische Komponente (G, T) enthält, dass in das erste (10) der beiden Behälterteile (10, 20) eine den Oberflächenabschnitt (11) ringförmig umfassende Nut (13) eingeformt wird, dass in das zweite Behälterteil (20) ein ringförmig geschlossener Steg (22) eingeformt wird, dass in die Nut (13) härtbarer Klebstoff eingefüllt wird, dass durch Einbringen des Stegs (22) in die Nut (13) die beiden Behälterteile (10, 20) miteinander verfugt werden und hierbei der härtbare Klebstoff in eine beim Verfugen gebildete Fuge gepresst wird, und dass der so vorgefertigte Behälter einer Wärmehandlung unterzogen wird, bei der eine gehärteten Klebstoff (33) enthaltende Klebverbindung (30) gebildet wird.

14. Verfahren nach Anspruch 13, **dadurch gekennzeichnet, dass** vor dem Verfugen der beiden Behälterteile (10, 20) am ersten Behälterteil (10) eine Montagehilfe (40) befestigt und das zweite Behälterteil (20) zwischen mindestens einem ersten Druckbalken (41) der Montagehilfe und dem ersten Behälterteil (10) angeordnet wird, und dass nachfolgend der erste Druckbalken (41) mit einer definierten Kraft beaufschlagt und das zweite Behälterteil (20) unter Bildung der Verfugung verschoben wird.

15. Verfahren nach Anspruch 14, **dadurch gekennzeichnet, dass** vor der Wärmebehandlung das Isolierrohr (I) und eine erste Anschlussarmatur (24) des Isolierrohrs (I) zwischen einer am zweiten Behälterteil (20) befestigten zweiten Anschlussarmatur (21) des Isolierrohrs (I) und einem zweiten Druckbalken (41') der Montagehilfe (40) angeordnet werden, und dass nach Einbringen von Klebstoff in die erste (21) und in die zweite Anschlussarmatur (24) der zweite Druckbalken (41') mit einer definierten Kraft beaufschlagt wird und so die zweite Anschlussarmatur (21) und das Isolierrohr (I) unter Bildung einer klebstoffgefüllten ersten Verfugung und das Isolierrohr (I) und die erste Anschlussarmatur (24) unter Bildung einer klebstoffgefüllten zweiten Verfugung ineinander geschoben werden.

## Claims

1. Cooling device in an electrical component (G, T) of a high-voltage assembly (A) with a heat pipe (W), which, during operation of the assembly, transfers lost heat formed in the electrical component to a heat exchanger (K) by virtue of evaporation of a working medium and subsequent condensing of the evaporated working medium and has a tank (B), to which a high-voltage potential is applied and which is subjected to the lost heat, for accommodating the working medium and an insulating pipe (I) which is connected to the tank, **characterized in that** the tank (B) contains at least two tank parts (10, 20), which are cohesively connected to one another and of which the first (10) has a first surface section (11, 11'), arranged in the interior of the tank (B), of the electrical component (G, T) and the second (20) bears a hollow connecting fitting (21) for the insulating pipe (I).

2. Cooling device according to Claim 1, **characterized in that** the cohesive connection is in the form of an adhesive-bonding connection (30).

3. Cooling device according to Claim 2, **characterized in that** the adhesive-bonding connection (30) comprises a joint between the two tank parts (10, 20) in the form of a groove connection.

4. Cooling device according to Claim 3, **characterized in that** a groove (13) of the groove connection is formed into the first tank part (10), said groove surrounding the first surface section (11, 11') in the form of a ring, **in that** the second tank part (20) has a web (22) inserted into the groove (13), and **in that** a join arranged between the base of the groove (13) and two groove edges adjoining the groove base and the web (22) of the second tank part (20) is filled with cured adhesive (33).

5. Cooling device according to Claim 4, **characterized in that** the second tank part (20) contains at least one fringe (23) arranged outside the groove (13) and integrated in the adhesive-bonding connection.

6. Cooling device according to Claim 2, **characterized in that** the adhesive-bonding connection has a first joining face (31), which is formed into the surface of the first tank part (10) and surrounds the first surface section (11, 11') in the form of a ring, and a second joining face (32), which is formed into the surface of the second tank part (20) and overlaps the first joining face (31), as well as a join which is arranged between the first and the second joining faces and is filled with cured adhesive (33).

7. Cooling device according to Claim 6, **characterized in that** a depression (12) containing the first surface section (11, 11') is formed into the first tank part (10).

8. Cooling device according to Claim 7, **characterized in that** the second tank part (20) is flat or angled.

9. Cooling device according to one of Claims 6 to 8, **characterized in that** the second tank part (20) is curved and has an outer edge which bears the second joining face (32) and is flat or angled.

10. Cooling device according to Claim 6, **characterized in that** two mutually communicating depressions (12', 12" ) are formed into the first tank part (10), **in that** the first depression (12') has the first surface section (11') and the second depression (12" ) has a second surface section (11" ) of the electrical component (G, T), and **in that** the second tank part (20) contains two plates (20', 20" ), which each delimit one of the two depressions on the outside so as to form two mutually communicating partial volumes of the tank (B).

11. Cooling device according to one of Claims 1 to 10, **characterized in that** the first surface section (11) is coated with a material which facilitates the boiling operation of the working medium.

12. Cooling device according to one of Claims 1 to 11, **characterized in that** the hollow connecting fitting (21) is connected detachably to the second tank part (20).

13. Method for manufacturing a cooling device in an electrical component (G, T) of a high-voltage assembly (A) with a heat pipe (W), which, during operation of the assembly, transfers lost heat formed in the electrical component to a heat exchanger (K) by virtue of evaporation of a working medium and subsequent condensing of the evaporated working medium and has a tank (B), to which a high-voltage potential is applied and which is subjected to the lost heat, for accommodating the working medium and an insulating pipe (I) which is connected to the tank, **characterized in that** at least two parts (10, 20) of the tank (B) are prefabricated, of which the first (10) contains a surface section (11) of the electrical component (G, T), **in that** a groove (13) is formed into the first (10) of the two tank parts (10, 20), said groove surrounding the surface section (11) in the form of a ring, **in that** a web (22) which is closed in the form of a ring is formed into the second tank part (20), **in that** curable adhesive is introduced into the groove (13), **in that** the two tank parts (10, 20) are joined with one another by introducing the web (22) into the groove (13) and, in the process, the curable adhesive is pressed into a join formed during the joining process, and **in that** the thus prefabricated tank is subjected to thermal treatment, in which an adhesive-bonding connection (30) containing cured adhesive (33) is formed.

14. Method according to Claim 13, **characterized in that**, prior to the joining of the two tank parts (10, 20), a mounting aid (40) is fastened to the first tank part (10) and the second tank part (20) is arranged between at least one first press bar (41) of the mounting aid and the first tank part (10), and **in that** a defined force is then applied to the first press bar (41) and the second tank part (20) is moved so as to form the joint.

15. Method according to Claim 14, **characterized in that**, prior to the thermal treatment, the insulating pipe (I) and a first connecting fitting (24) of the insulating pipe (I) are arranged between a second connecting fitting (21) of the insulating pipe (I), said second connecting fitting being fastened to the second tank part (20), and a second press bar (41') of the mounting aid (40), and **in that**, once adhesive has been introduced into the first connecting fitting (24) and into the second connecting fitting (21), a defined force is applied to the second press bar (41') and thus the second connecting fitting (21) and the insulating pipe (I) are pushed one inside the other so as to form a first joint filled with adhesive and the insulating pipe (I) and the first connecting fitting (24) are pushed one inside the other so as to form a second joint filled with adhesive.

## Revendications

1. Dispositif de refroidissement prévu dans un composant électrique (G, T) d'une installation (A) à haute tension et présentant un tube caloporteur (W) qui, en évaporant un agent de travail et ensuite en condensant l'agent de travail évaporé, transfère à un refroidisseur (K) la chaleur de perte dégagée lorsque l'installation fonctionne,
le tube caloporteur présentant un récipient (B) sur lequel est appliqué le potentiel de la haute tension et exposé aux chaleurs de perte, et reprenant l'agent de travail ainsi qu'un tube d'isolation (I) relié au récipient,
**caractérisé en ce que**
le récipient (B) contient au moins deux parties (10, 20) de récipient reliées l'une à l'autre en correspondance de matière, parmi lesquelles la première (10) présente une partie de surface (11, 11') du composant électrique (G, T) disposée à l'intérieur du récipient (B) et la deuxième (20) porte une armature creuse de raccordement (21) pour le tube d'isolation (I).

2. Dispositif de refroidissement selon la revendication 1, **caractérisé en ce que** la liaison en correspondance de matière est configurée sous la forme d'une liaison collée (30).

3. Dispositif de refroidissement selon la revendication 2, **caractérisé en ce que** la liaison collée (30) forme entre les deux parties (10, 20) du récipient une jonction qui présente la forme d'une liaison par rainure et languette.

4. Dispositif de refroidissement selon la revendication 3, **caractérisé en ce qu'**une rainure annulaire (13) de la liaison par rainure et languette, qui comprend la première partie de surface (11, 11'), est formée dans la première partie (10) du récipient, **en ce que** la deuxième partie (20) du récipient présente une nervure (22) insérée dans la rainure (13) et **en ce qu'**un joint situé entre le fond de la rainure (13) ainsi que les deux flancs de la rainure qui se raccordent au fond de la rainure et la nervure (22) de la deuxième partie (20) du récipient est rempli d'adhésif (33) durci.

5. Dispositif de refroidissement selon la revendication 4, **caractérisé en ce que** la deuxième partie (20) du récipient contient au moins une bordure (23) intégrée dans la liaison collée et disposée à l'extérieur de la rainure (13).

6. Dispositif de refroidissement selon la revendication 2, **caractérisé en ce que** la liaison collée présente une première surface de jonction (31) formée dans la surface de la première partie (10) du récipient et entourant en anneau la première partie de surface (11, 11') et une deuxième surface de jonction (32) formée dans la surface de la deuxième partie (20) du récipient et superposée à la première surface de jonction (31), ainsi qu'un joint situé entre la première et la deuxième surface de jonction et rempli d'adhésif (33) durci.

7. Dispositif de refroidissement selon la revendication 6, **caractérisé en** cde qu'un creux (12) qui contient la première partie de surface (11, 11') est formé dans la première partie (10) du récipient.

8. Dispositif de refroidissement selon la revendication 7, **caractérisé en ce que** la deuxième partie (20) du récipient a une configuration plane ou coudée.

9. Dispositif de refroidissement selon l'une des revendications 6 à 8, **caractérisé en ce que** la deuxième partie (20) du récipient a une forme bombée et présente un bord extérieur de configuration plane ou coudée qui porte la deuxième surface de jonction (32).

10. Dispositif de refroidissement selon la revendication 6, **caractérisé en ce que** deux creux (12', 12'') communiquant l'un avec l'autre sont formés dans la première partie (10) du récipient, **en ce que** le premier creux (12') présente la première partie de surface (11') et le deuxième creux (12'') une deuxième partie de surface (11") du composant électrique (G, T) et **en ce que** la deuxième partie (20) du récipient contient deux plaques (20', 20") qui délimitent chacune vers l'extérieur l'un des deux creux en formant deux parties communiquant l'une avec l'autre du volume du récipient (B).

11. Dispositif de refroidissement selon l'une des revendications 1 à 10, **caractérisé en ce que** la première partie de surface (11) est revêtue d'un matériau qui facilite l'opération de vaporisation de l'agent de travail.

12. Dispositif de refroidissement selon l'une des revendications 1 à 11, **caractérisé en ce que** l'armature creuse de raccordement (21) est reliée de manière libérable à la deuxième partie (20) du récipient.

13. Procédé de fabrication d'un dispositif de refroidissement dans un composant électrique (G, T) d'une installation (A) à haute tension, avec un tube caloporteur (W) qui, en vaporisant un agent de travail et ensuite en condensant l'agent de travail évaporé, transfère à un refroidisseur (K) la chaleur de perte dégagée dans le composant électrique lorsque l'installation est en fonctionnement, le tube caloporteur présentant un récipient (B) sur lequel est appliqué le potentiel de haute tension et exposé à la chaleur de perte et qui reprend l'agent de travail, ainsi qu'un tube d'isolation (I) relié au récipient, **caractérisé en ce que**
au moins deux parties (10, 20) du récipient (B) parmi lesquelles la première (10) contient une partie de surface (11) du composant électrique (G, T) sont préfabriquées,
**en ce qu'**une rainure (13) qui entoure en anneau la partie de surface (11) est formée dans la première (10) des deux parties (10, 20) du récipient,
**en ce qu'**une nervure (22) en forme d'anneau fermé est formée dans la deuxième partie (20) du récipient,
**en ce que** la rainure (13) est remplie d'un adhésif durcissable,
**en ce qu'**en plaçant la nervure (22) dans la rainure (13), les deux parties (10, 20) du récipient sont reliées l'une à l'autre et l'adhésif durcissable est ainsi comprimé dans le joint formé lors de la jonction et
**en ce que** le récipient ainsi préfabriqué subit un traitement thermique dans lequel une liaison collée (30) qui contient de l'adhésif durci (33) est formée.

14. Procédé selon la revendication 13, **caractérisé en ce qu'**avant la jonction des deux parties (10, 20) du récipient, un accessoire de montage (40) est fixé sur la première partie (10) du récipient et la deuxième partie du récipient (20) est disposée entre au moins une première barre de poussée (41) de l'accessoire de montage et la première partie (10) du récipient et **en ce qu'**ensuite, une force définie est appliquée sur la première barre de poussée (41) et la deuxième partie (20) du récipient est déplacée pour former la jonction.

15. Procédé selon la revendication 14, **caractérisé en ce qu'**avant le traitement thermique, le tube d'isolation (I) et une première armature de raccordement (24) du tube d'isolation (I) sont disposés entre une deuxième armature de raccordement (21) du tube d'isolation (I) fixée sur la deuxième partie (20) du récipient et une deuxième barre de poussée (41') de l'accessoire de montage (40) et **en ce qu'**après avoir placé l'adhésif dans la première armature de raccordement (24) e t la deuxième armature de raccordement (21), une force définie est appliquée sur la deuxième barre de poussée (41'), ce qui fait coulisser la deuxième armature de raccordement (21) dans le tube d'isolation (I) en formant une première jonction remplie d'adhésif et le tube d'isolation (I) dans la première armature de raccordement (24) en formant une deuxième jonction remplie d'adhésif.
